Europäisches Patentamt

European Patent Office

Office européen des brevets

(19)

(11) EP 1 071 912 B1

(12) EUROPEAN PATENT SPECIFICATION

(45) Date of publication and mention
of the grant of the patent:
**18.12.2002 Bulletin 2002/51**

(51) Int Cl.⁷: **F23G 5/027**, F23G 5/16

(21) Application number: **99915964.3**

(86) International application number:
**PCT/HU99/00029**

(22) Date of filing: **16.04.1999**

(87) International publication number:
**WO 99/054662 (28.10.1999 Gazette 1999/43)**

(54) **METHOD AND APPARATUS FOR THE PREVENTION OF GLOBAL WARMING, THROUGH ELIMINATION OF HAZARDOUS EXHAUST GASES OF WASTE AND/OR FUEL BURNERS**

VERFAHREN UND VORRICHTUNG ZUR VORBEUGUNG GLOBALER ERWÄRMUNG DURCH ENTFERNUNG VON SCHÄDLICHEN RAUCHGASEN AUS MÜLL- UND/ODER BRENNSTOFFBRENNERN

PROCEDE ET APPAREIL DESTINES A LA PREVENTION DU RECHAUFFEMENT DE LA PLANETE PAR L'ELIMINATION DES GAZ D'ECHAPPEMENT NOCIFS PROVENANT DES INCINERATEURS ET/OU DES BRULEURS

(84) Designated Contracting States:
**AT BE CH CY DE DK ES FI FR GB GR IE IT LI LU MC NL PT SE**
Designated Extension States:
**AL LT LV MK RO SI**

(30) Priority: **17.04.1998 HU 9800898**

(43) Date of publication of application:
**31.01.2001 Bulletin 2001/05**

(73) Proprietor: **Reactor Combustion World Organisation S.A.**
**98000 Monte-Carlo (MC)**

(72) Inventors:
• **INOVIUS, Allan**
**H-1132 Budapest (HU)**

• **INOVIUS, Carlo, P., A.**
**H-1132 Budapest (HU)**
• **INOVIUS, Lili, Madeleine**
**H-1132 Budapest (HU)**

(74) Representative:
**McLeish, Nicholas Alistair Maxwell et al**
**Boult Wade Tennant**
**Verulam Gardens**
**70 Gray's Inn Road**
**London WC1X 8BT (GB)**

(56) References cited:
**EP-A- 0 535 260          EP-A- 0 825 382**
**WO-A-97/13594          DE-A- 4 127 872**
**GB-A- 1 401 207          US-A- 4 334 484**
**US-A- 5 732 571**

## Description

### Technical Field

The present invention relates to a method and apparatus for the prevention of global warming, through elimination of hazardous exhaust gases of waste and/ or fuel burners. The apparatus of the invention utilises a so-called complete combustion reactor for reducing the contents of nitrogen oxides and sulphur oxides in combustion gases. This reactor comprises a post-combustion second reactor chamber to be connected together with or after a first reactor chamber.

### Background Art

A major problem in the combustion of liquid and solid fuels is the content of sulphur oxides and nitrogen oxides present in the flue gas. Thus many attempts have been made to reduce this oxide content, both by flue gas cleaning and by catalytic treatment of the exhaust gases. The efforts resulted in strong reduction of the noxious components in the exhaust gases, but the amount of $CO_2$ in the flue gas did not decrease. $CO_2$ emission is one of the main causes of the greenhouse effect contributing to the world-wide threat of global warming, therefore it is of utmost importance to reduce or eliminate the emitted $CO_2$ in combustion processes. DE 4127 872 discloses a method for the combustion of waster at high temperatures. Swedish Patent 7804761-0 (SE-B-413,158) discloses an apparatus for the combustion of a mixture of gaseous or particulate, combustible material and combustion air. This apparatus is used for combusting various gaseous or particulate materials containing carbon or carbon compounds, in such a complete manner that the combustion gases emitted are practically free from soot, carbon monoxide and hydrocarbon residues. It is, however, not disclosed in the patent specification how the $CO_2$ emission of the apparatus may be reduced, together with a reduction of the contents of nitrogen oxides and sulphur oxides in combustion gases.

DE-A-3,014,590 discloses a pre-combustion chamber for an oil- or gas-fired, fan-supported burner. This pre-combustion chamber serves to shape the generated flame and to retard it before entering the combustion chamber. This apparatus thus serves as an intermediary between the burner and the combustion chamber. There is no teaching for using the reactor for the evaporation or gasification of waste, or concerning the reduction of the $CO_2$ output.

US-P-5,041,268 discloses a complete combustion reactor and a method to burn waste with a system using two complete combustion reactors. The disclosed apparatus is suitable for a clean burning of the waste, but the $CO_2$ emission problem is still not solved. In particular, it is not disclosed how the non-gaseous components of the exhaust gases may be efficiently removed from the flue gases.

The object of the invention is to reduce or eliminate the flue gas exhausts of combustion processes, in a manner which maintains the high efficiency of the combustion process, but makes it possible to reduce the output $CO_2$ or other gas components contributing to the global warming phenomenon. At the same time it is an object of the invention to improve the efficiency and the overall cleanness of the process where possible, and to provide a method and apparatus where the complete cleaning or recycling of the combustion residues is possible.

### Summary of the Invention

According to the invention, these objects are achieved by a method of claim 1.

In the following patent specification the term "complete combustion reactor" is used for denoting a special form of a combustion reactor having a cone-formed partition, which separates the cylindrical reactor chamber into a first reactor chamber or combustion chamber, and a second reactor chamber or post-combustion chamber. Such a reactor is described among others in the US patents No. 3,460,916, No. 4,262,609 and No. 5,041,268.

Preferably a fluidised bed, roaster, kiln, oven, waste incinerator or waste burning plant is used as incinerator apparatus. In a particularly useful application, less than 12%, preferably less than 10% water is additionally introduced into the first and/or second reactor chamber of the complete combustion reactor. The water may be added artificially, to keep a certain reaction balance, but may also be naturally included in the waste to be burned. This is the case with the burning of contaminated slam, or spilled oil from sea shores or collected directly from the water.

For an improved cleaning of the flue gas, it is foreseen that

     a, the flue gases exiting the complete combustion reactor are introduced into a second complete combustion reactor, and
     b, the flue gases exiting from the first complete combustion reactor are combusted as fuel in the second complete combustion reactor in a complete combustion process.

In an advantageous embodiment the complete combustion reactor is positioned within a tank containing fuel and/or waste, and the fuel and/or waste in the tank is evaporated/gasified by the heat generated by the complete combustion reactor. In order to improve the uniform evaporation or gasification, it is preferred that the fuel and/or particularly the waste is being moved and/or mixed and/or stirred during the evaporation/gasification.

In certain cases thermoelectric semiconductors are placed on the outer periphery of the first and/or second complete combustion reactor, and electric energy is produced by the thermoelectric semiconductors.

Advantageously, the recycling of the cleaned exhaust gas, preferably $CO_2$, is made by bubbling up in water for alga, rice or biomass production, or by compressing in steel tubes.

Under certain circumstances, the complete combustion process in the complete combustion reactor is based on the following formulae:

$$O_2 + O_2 + O_2 \Leftrightarrow O_3 + O_3$$

$$C + O_3 \Leftrightarrow CO + CO_2$$

$$SO_2 + CO + H_2O \Leftrightarrow H_2S + CO_2 + O + O$$

$$SO_2 + H_2S \Leftrightarrow S + S + H_2O + O \Leftrightarrow S_2 + H_2O + O$$

In a possible variation of the method of the invention the remaining gaseous components of the flue gas following the combustion in the first or second complete combustion reactor are passing through a cleaning unit. The cleaning unit may be a third complete combustion reactor, where the remaining gaseous components are combusted completely.

The invention also concerns an apparatus as described in claim 15 for incinerating and/or combusting fuel and/or waste, particularly for performing the method according to the invention to prevent global warming.

In a preferred embodiment the apparatus comprises a second complete combustion reactor, and second connecting means connecting the exit opening of the complete combustion reactor with the inlet of the second complete combustion reactor.

Preferably, the first and/or second complete combustion reactor is positioned in a tank containing fuel and/or waste. It is especially useful if the tank is cylindrical in the horizontal cross-section, and the first complete combustion reactor is placed vertically in the tank, its vertical central axis being concentric or eccentric in relation to the vertical central axis of the tank.

In a particularly advantageous embodiment, the apparatus comprises thermoelectric semiconductors positioned on the outer periphery of the first and/or second complete combustion chamber.

Preferably the exhaust condenser is comprising two cones with a common vertical central axis, with their tip pointing towards each other, and a lime absorbing filter placed under the cones in the path of the solid and/or fuel condensate.

Optionally, the apparatus may comprise a gas cleaning unit after the output of the first or second complete combustion reactor or the exhaust condenser. In a preferred embodiment the cleaning unit comprises a third complete combustion reactor, where all residual non-oxidised compounds arc oxidised or reduced to pure or inert form.

## Brief Description of Drawings

The invention will now be described in more detail hereinbelow with reference to the accompanying drawings, which, by way of example only, illustrate a preferred embodiment of the method and apparatus according to the invention.

In the drawings

FIG. 1 is a schematic chart showing the steps of the method of the invention, and at the same time the structure of the apparatus according to the invention,

FIG. 2 is a cross-section of the incinerator apparatus used in the invention,

FIG. 3 is a cross-section schematically showing the structure of the complete combustion reactors used in the invention,

FIG. 4 is a cross-section schematically showing the structure of the gas condenser means used in the invention,

FIG. 5 is a cross-section schematically showing the structure and the working principle of the gas recycling means used in the invention.

## Best Mode for Carrving out the Invention

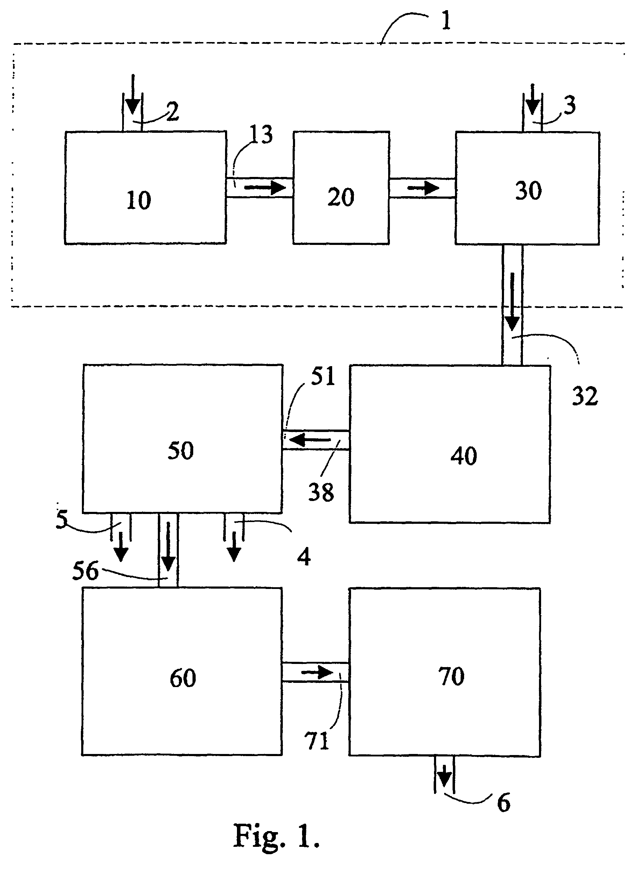

Fig. 1    illustrates the sequence of the steps taken in the method according to the invention, and at the same time shows the structural elements of the apparatus of the invention.

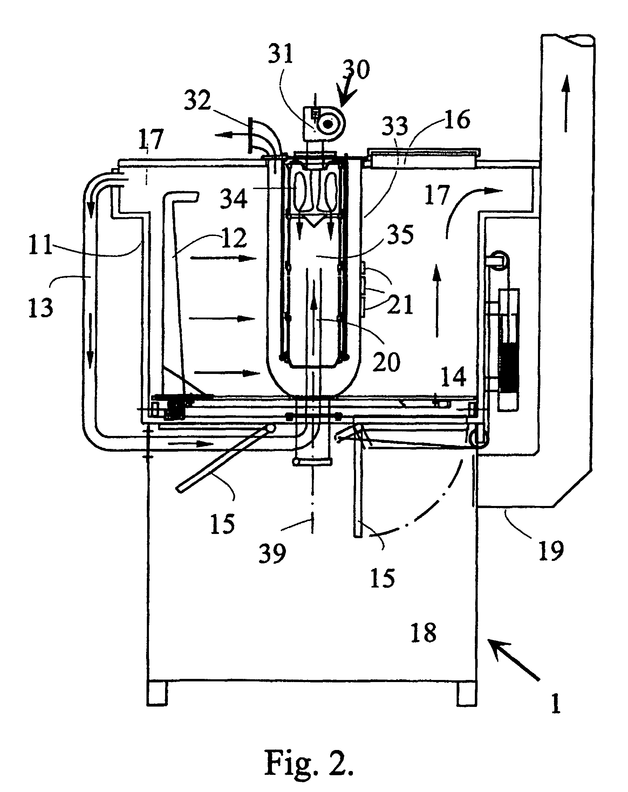

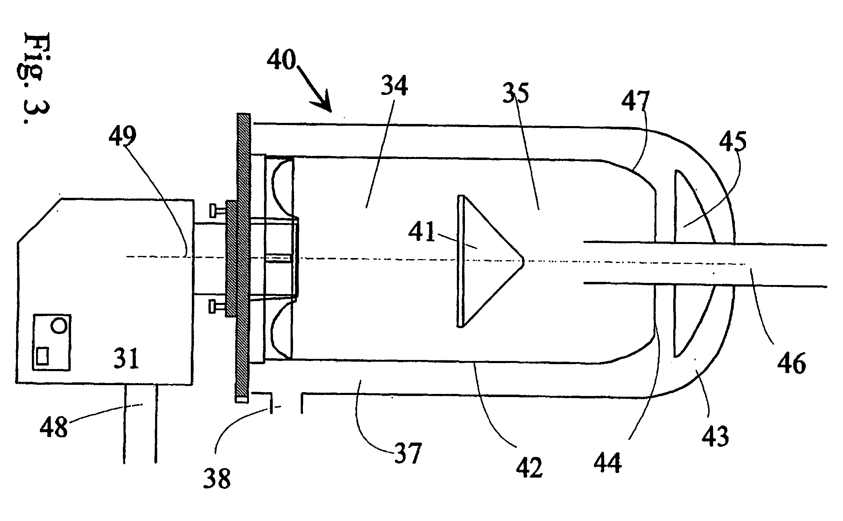

As a first step, fuel and/or waste is introduced in a first complete combustion reactor, and the fuel and/or combustible waste is ignited and burned. The structure and the working of the complete combustion reactor will be explained with reference to Fig. 3. Thereafter, or parallel with the first step, fuel and/or waste is introduced into an incinerator apparatus 10. In this preferred embodiment, the incinerator apparatus 10, the first complete combustion reactor 30 and the gas accelerator means 20 are all part of an incinerator plant 1, which will be described in Fig 2.

At least a portion of the fuel and/or waste is evaporated and/or gasified in the incinerator apparatus 10, and through the gas outlet 13 the gases or vapours generated from the fuel/and or waste are accelerated in the gas accelerator means 20, from where the vapours and/or gases are introduced into the first and/or second reactor chamber of the complete combustion reactor 30. Here, the molecules of the vapours and/or gases arc at least partly atomised, i. e. split up by chemical and physical processes into constituting atoms or smaller molecules.

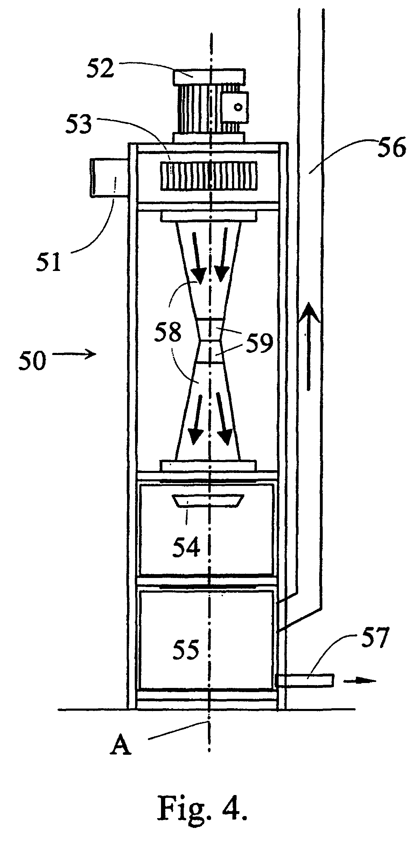

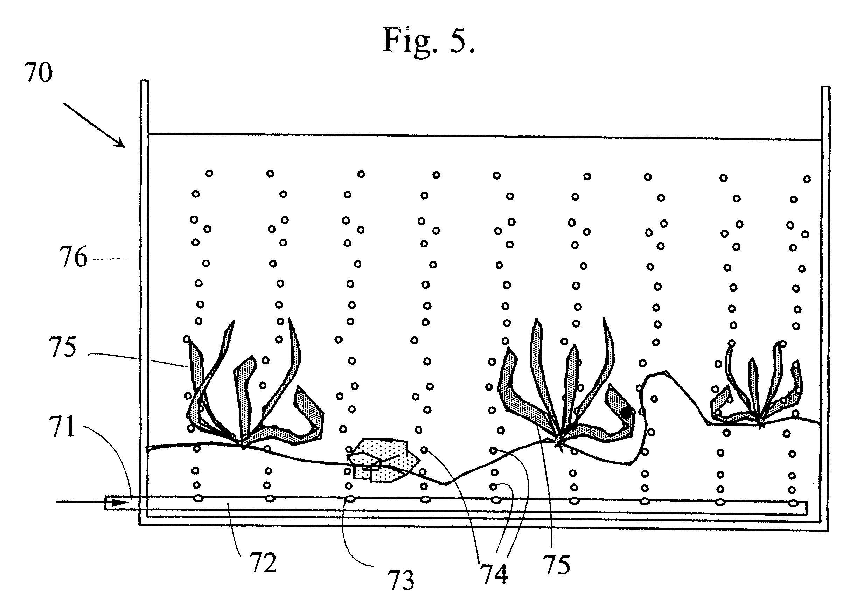

Via the flue gas outlet 32 and the flue gas inlet 51, the flue gas from the complete combustion process in the complete combustion reactor 30 is guided into the gas condenser means 50, where the solid and condensable particles from the flue gas are condensed and extracted from the flue gas, and removed from the process through the condensate outlet 4. Any residual condensed water and remaining fluids arc removed through the water outlet 5. The structure of the gas condenser means is shown in Fig. 4. The method of the invention finally completely recycles the cleaned exhaust gas, particularly the $CO_2$ content of the exhaust gas in the gas recycling means 70. The cleaned exhaust gases are entering the gas recycling means 70 through the gas inlet 71, and the remaining inert gases, mainly nitrogen, are leaving the process through gas outlet 6. The principle of an embodiment of the gas recycling means is shown in Fig. 5.

Optionally, the method of the invention and the apparatus may include the second complete combustion reactor 40 and/or the exhaust gas cleaner means 60. The second complete combustion reactor 40 is placed between the flue gas outlet 32 of the first complete combustion reactor 30 and the inlet 51 of the gas condenser means 50. The function of the second complete combustion reactor 40 is to further atomise or burn the contents of the flue gas leaving the first complete combustion reactor 30. Depending on the type of fuel and waste burned in the incinerator apparatus 10, the second complete combustion reactor 40 may be left out completely.

The gas cleaner means 60 is after or before the gas condenser means 50, but before gas recycling means 70. The gas cleaner means 60 may be constructed as a known catalytic cleaner, but in the preferred embodiment it is a third complete combustion reactor, somewhat smaller than the previous complete combustion reactors. The function of the gas cleaner means 60 is to remove or break up the non-burning or inert gaseous components of the flue gas exiting from the first complete combustion reactor 30 or the second complete combustion reactor 40. For most materials the burning process in the complete combustion reactor 30 ensures a complete combustion, so the exiting flue gases after the gas condenser means 50 contain only $CO_2$ beside clean $N_2$. Therefore, in most cases the gas cleaner means 60 may be left out as well.

Fig. 2 shows an incinerator plant 1, where the first steps of the method of the invention are performed. In this embodiment, the incinerator plant I includes the incinerator apparatus 10, the accelerator 20 and the first complete combustion reactor 30 shown in Fig. 1. The incinerator plant 1 has an incinerator tank 11, preferably with a circular horizontal cross-section, and a closed volume 14. Somewhat eccentrically placed in the volume is a vertical complete combustion reactor 30, i. e. the axis 39 of the complete combustion reactor 30 does not coincide with the axis of the tank 11. The upper region of the tank is designated as the gas collector region 17.

The complete combustion reactor 30 comprises first and second reactor chambers 34 and 35, and the fuel and/or combustible waste is blown into the first reactor chamber 34 by burner 31. The exhaust gases from the complete combustion reactor 30 leave through flue gas outlet 32. The functioning of the complete combustion reactor 30 is explained with reference to Fig. 3.

Returning to the incinerator plant 1, it is understood that the incinerator apparatus of the invention is here embodied by the tank 11, where the waste and/or fuel is incinerated by the heat generated by the complete combustion reactor 30. It must be noted that other types of incinerators are also applicable. In certain other, not illustrated embodiments a fluidised bed, roaster, kiln, oven, waste incinerator or waste burning plant may be used as well as the incinerator apparatus 10. In these latter embodiments the flue gases of the incinerator apparatus are collected and fed through an accelerator 20 into the complete combustion reactor 30. As will be explained below, the natural turbulence of a complete combustion reactor will in most cases act as an accelerator 20, but other known means to accelerate the flue gases of the incinerator apparatus are also foreseen.

The upper part of the volume 14 is formed as a gas collector region 17, being connected with the tube 13 to the second reactor chamber 35 of the complete combustion reactor 30. The tank 11 also comprises stirring and/or mixing means 12, which may be rotated to mix the fuel/and or waste in the tank 11. The fuel and/or waste is introduced into the tank 11 through input 16. The shown embodiment is especially suitable for the burning of discarded rubber tyres and similar waste having a high polluting potential. The waste in the closed volume 14 of the tank 11 is evaporated by the heat generated by the first complete combustion reactor 30. The gases and vapours which develop during the evaporation are collected in the gas collector region 17, and led through the gas outlet 13 into the second reactor chamber 35 of the complete combustion reactor 30.

The gas and the vapours are accelerated by the reactor processes in the second reactor chamber 35 of the complete combustion reactor 30, i. e. in this embodiment the accelerator 20 is second reactor chamber 35 of the complete combustion reactor 30. Other means for accelerating the exhaust gas are suitable as well, e. g. an air pump and appropriately formed nozzles in the tube which constitutes the flue gas outlet 32.

The residuals and ashes of the evaporation process are removed via outputs 15 into ash room 18. For safety, the ash room 18 is provided with a chimney 19, which is normally closed down.

The evaporated waste emanating from the tank 11 is burned up completely or almost completely in the complete combustion process within the complete combustion reactor 30. Such a complete combustion process is described in detail in US patent No. 5,041,268. In addition to the known formula disclosed in this process, it has been found that under appropriate conditions the following formula for the combustion of sulphuric substances are also applicable:

$$O_2 + O_2 + O_2 \Leftrightarrow O_3 + O_3$$

$$C + O_3 \Leftrightarrow CO + CO_2$$

$$SO_2 + CO + H_2O \Leftrightarrow H_2S + CO_2 + O + O$$

$$SO_2 + H_2S \Leftrightarrow S + S + H_2O + O \Leftrightarrow S_2 + H_2O + O$$

Especially noteworthy is the formation of ozone, which is explained by the multiple reflections of the infrared radiation on the inner walls of the reactor chambers.

If the waste to be burned includes relatively large amounts of chlor, it is advisable to keep the process under low-oxidation or under-stoichiometric conditions, in order to avoid the oxidation of the chlor into dioxines.

In the specific embodiment shown, the efficiency of the incinerator plant 1 is further increased by the application of thermoelectric semiconductors 21. These are so-called Peltier-elements, which produce electric current if the two sides thereof have different temperature. In Fig. 2, only a few such elements are depicted, but theoretically the whole external surface of the shell 33 may be covered with such thermoelectric semiconductors 21. In practice, the temperature difference on the two sides of the semiconductors 21 may be as much as 300 C°, and approximately 20-15% of the thermal energy dissipated through the shell 33 may be directly converted into electrical energy in this manner. The generated electricity may be used readily to drive the mechanical parts of the incinerator plant 1, e. g. the injector of the burner 31 or the stirring means 12. Of course, the semiconductors 21 may be applied on the outer surface of the shell 43 of the complete combustion reactor 40 as well, or on the corresponding outer shell of the complete combustion reactor embodying the gas cleaner unit 60.

Depending on the type of the waste of fuel burned in the incinerator plant 1, it may be necessary to perform an afterburning of the flue gas exiting from the first complete combustion reactor 30. This afterburning is made in the complete combustion reactor 40.

The arrangement shown in FIG. 3 shows the structure of the complete combustion reactor 40, which is a reactor for reducing the contents of nitrogen oxides and sulphur oxides in combustion gases. The complete combustion reactor 30 and the complete combustion reactor used as the gas cleaner unit 60 have an identical structure, but the dimensions and minor technical details may be different. The reactor 40 has a casing or wall 42, and a generally cylindrical shell 43 and a dome-shaped outlet end 47 associated therewith. The dome-shaped outlet end 47 has a central outlet opening 44, which is covered by the outlet cover 45, leaving a gap for the gases exiting through the outlet opening 44. At one end of the shell 43 is an inlet end, where the burner 31 is located. Inside the casing 42, there is provided a conical partition 41 concentrically with the central axis 49 of the second complete combustion reactor 40. The partition 41 has its apex directed towards the outlet end 47. The shape of the reactor casing 42, the outlet end 47, and the placement of the conical partition 41 are of central importance for the functioning of the complete combustion reactor 40. At the outlet end 47 of the reactor, there is provided an inlet funnel 46 which leads the exhaust gases from a combustion chamber (e. g. from the gas collector region 17) into the second reactor chamber 35, so that the exhaust gases will be introduced at a suitably high velocity. The fuel entering the reactor from the fuel inlet 48 through the burner 31 is directed towards the conical inner side of the partition 41. Around the casing 42, there is provided a further casing or shell 43. The gap37 between the casing 42 and the shell 43 is connected at the bottom to an outlet pipe 38. In a typical embodiment, the casing 42 and the outlet cover 45 are made of high-grade ceramics, while the shell 43 is made of steel. Under operation, the shell 43 and the outlet cover 45 are heated by the intense infrared radiation of the casing 42, and the heat is radiated further by the shell 43. E. g. in the incinerator plant shown in Fig. 2, the evaporation and/or gasification of the waste in the tank 11 are done by the heat produced in the complete combustion reactor 30, and radiated by the shell 33.

When using the complete combustion reactor according to FIG. 3, it is advantageous to have the exhaust gases from inlet funnel 46 arrive in the second reactor chamber 35 at a high velocity. In the second reactor chamber 35 the gas velocity is increased. and in the resulting oxidation process the residual carbon monoxide and other noxious gases will oxidise into carbon dioxide or become atomised, and this oxidation and atomisation will develop in the first and second reactor chambers. From the outlet opening 44, the flue gases enter into the gap 37 between the casings 42 and 43 where afterburning and treatment of sulphur oxides and nitrogen oxides are performed.

The principle of the working of the complete combustion reactor is described in detail in e. g. US patent No. 5,041,268. Here we mention only that the complete combustion reactor creates ideal turbulence for final oxidation of all hydrocarbon materials, with a controlled low partial pressure in the gas phase to achieve a sufficient contact time with hot catalytic surfaces in the first and second reactor chambers. The hot contact surfaces initially consist of the material in the partition 41. Behind this concave partition 41, in the second reactor chamber 35, there is thus a slower turbulence in a reducing atmosphere in order to obtain the necessary production of carbon monoxide for the process, e.g. for reducing the sulphur content in the combustion gases. In stoichiometric combustion, sulphur deposits by more than 90% as sulphur droplets which have been sublimated during the cooling. This sulphur content is condensed from the flue gas in the gas condenser unit 50. As mentioned before, the structure of the complete combustion reactor 30 is almost identical to the complete combustion reactor 40 explained with reference to Fig. 3. It must be noted that the complete combustion reactor 30 is larger, i. e. it is longer and wider than the complete combustion reactor 40. Due to its large size, the complete combustion reactor 30 may be constructed of several segments, as shown in Fig. 2.

The flue gas exiting the complete combustion reactor 30 or the complete combustion reactor 40 is led into the gas condenser 50, in order to separate the fluid and solid particles from the flue gas, so that only gaseous substances go on to the last stage of the recycling process in the recycling unit 70.

A possible embodiment of the gas condenser 50 is shown in Fig. 4. Here the main part of the condenser is the two hollow cones 58, which are placed on top of each other with a common vertical central acis A, and their tips 59 are pointing towards each other. The flue gas enters the condenser via the flue gas input 51, and pumped through the cones with high velocity by the motor 52 and fan 53. The solid and fluid particles in the gas are collected in a lime stone block 54, placed under the cones in the way of the gas stream.

The gas, which has been lightly compressed by the pressure, will expand in the expansion chamber 55, where the condensed water is separated via the water outlet 57.

The gaseous fraction of the flue gas exits through the flue gas outlet 56, and is led into the gas recycling unit 70, or optionally first through a gas cleaning unit 60. The gas cleaning unit may be a third complete combustion reactor, the principle of which is explained with reference to Fig. 3. Optionally, an other known filter-type of catalytic cleaner unit may be used as well. It must be emphasised, however, that in most cases the two first complete combustion reactors 30 and 40 burn the evaporated fuel or waste completely, and there is no need for an additional cleaning unit.

Fig 5. illustrates the principle of a preferred embodiment of the gas recycling unit 70. The unit is constructed as a large-scale basin for growing algae, biomass, rice or other water-culture plants. The basin is enclosed by water-tight walls 76, but natural lakes are also suitable. The plants 75 are growing in the basin, and utilise the water, which latter is fertilised by the $CO_2$. The $CO_2$ is injected in the basin via gas inlet 71, which latter is connected to the tubing 72, which is provided with holes 73. The $CO_2$ gas is bubbling up through the holes 73 in the form of bubbles 74, which are absorbed in the water of the basin. The $CO_2$-enriched water acts as excellent and cheap fertiliser, providing large yields. Ultimately, the $CO_2$ emission of the waste or fuel combustion process is largely eliminated in this manner, or at least substantially reduced.

In another possible realisation of the method according to the invention, the $CO_2$ content of the flue gas is separated, if necessary further purified by chemical and/or physical methods, and compressed in steel tubes (not shown) for further use.

## Claims

1. Method for the prevention of global warming through elimination of hazardous exhaust gases of waste incinerators and/or fuel burners, comprising the following steps:

   a) introducing fuel and/or combustible waste into a cylindrical, thin walled complete combustion reactor (30) with a first reactor chamber (34) and a second reactor chamber (35) and igniting the fuel and/or combustible waste,
   b) introducing fuel and/or waste into an incinerator apparatus (10),
   c) evaporating/gasifying at least a portion of the fuel and/or Waste in the incinerator apparatus (10),
   d) accelerating the vapours and/or gases generated from the fuel and/or waste in the incinerator apparatus (10) and introducing the vapours and/or gases into the first and/or second reactor chamber (34, 35) of the complete combustion reactor (30),
   e) atomizing the vapours and/or gases in the first and/or second reactor chamber (34, 35) of the complete combustion reactor (30),
   f) guiding the exiting flue gases from the complete combustion reactor (30) into a flue gas condenser (50), and condensing the solid and condensable particles from the flue gas, and finally
   g) completely recycling the cleaned exhaust gas, particularly the $CO_2$, content of the exhaust gas, preferably as fertiliser.

2. Method according to claim 1, wherein a fluidised bed, roaster, kiln, oven, waste incinerator or waste burning plant (1) is used as an incinerator apparatus (10).

3. Method according to claim 1 or claim 2, wherein less than 12%, preferably less than 10% water is additionally introduced into the first and/or second reactor chamber (34, 35) of the complete combustion reactor (30).

4. Method according to any of claims 1 to 3, wherein

   a) the flue gases exiting the complete combustion reactor (30) are introduced into a second complete combustion reactor (40), and

b) the flue gases exiting from the first complete combustion reactor (30) are combusted as fuel in the second complete combustion reactor (40) in a complete combustion process.

5. Method according to claim 4, wherein the first complete combustion reactor (30) and/or second complete combustion reactor (40) is positioned within a tank (11) containing fuel and/or waste, and the fuel and/or waste in the tank (11) is evaporated/gasified by the heat generated by the first complete combustion reactor (30) and/or second complete combustion reactor (40).

6. Method according to claim 4, wherein fuel and/or waste is fed continuously and/or periodically into the tank (11).

7. Method according to claim 1 or claim 6, wherein the fuel and/or particularly the waste is being moved and/or mixed and/or stirred during the evaporation/gasification.

8. Method according to any one of the claims 5 to 7, wherein the solid remains. of the fuel and/or waste are continuously and/or periodically removed from the tank (11).

9. Method according to any one of the claims 1 to 8, wherein the evaporation/gasification of the waste is performed in low oxidation or under-stoichiometric conditions.

10. Method according to any one of the claims 1 to 9, wherein thermoelectric semiconductors (21) are placed on the outer periphery of the first and/or second complete combustion reactor (30, 40), and electric energy is produced by the thermoelectric semiconductors (21).

11. Method according to any of the claims 1 to 10, wherein the recycling of the cleaned exhaust gas, preferably $CO_2$, is made by bubbling up in water for alga, rice or biomass production, or by compressing in steel tubes.

12. Method according to any one of the claims 1 to 11, wherein the complete combustion in the first and/or second complete combustion reactor (30, 40) utilises the following formulae:

$$O_2 + O_2 + O_2 \Leftrightarrow O_3 + O_3$$

$$C + O_3 \Leftrightarrow CO + CO_2$$

$$SO_2 + CO + H_2O \Leftrightarrow H_2S + CO_2 + O + O$$

$$SO_2 + H_2S \Leftrightarrow S + S + H_2O + O \Leftrightarrow S_2 + H_2O + O$$

13. Method according to any one of the claims 1 to 12, wherein the remaining gaseous components of the flue gas following the combustion in the first and/or second complete combustion reactor (30, 40) are passed through a cleaning unit (60).

14. Method according to claim 13, wherein the cleaning unit (60) is a third complete combustion reactor, and the remaining gaseous components are combusted completely in the third complete combustion reactor.

15. An apparatus for incinerating and/or combusting fuel and/or waste, particularly for performing the method to prevent global warming according to claim 1, comprising

a) a closed waste and/or fuel incinerator apparatus (10) with a gas collector region (17),
b) a first complete combustion reactor (30),
c) gas accelerator means (20),
d) flue gas condenser means (50) connected to an exhaust opening of the first complete combustion reactor (30),
e) flue gas cleaner means (60) connected to the exhaust opening of the first complete combustion reactor (30), and
f) flue gas recycling means (70) connected to an output of the flue gas cleaner means (60),

**characterised in that** the first complete combustion reactor (30) has a first reactor chamber (34) a second reactor chamber (35) and said gas accelerator means (20) connects the gas collector region (17) of the incinerator apparatus (10) with the first and/or second reactor chamber (34, 35) of the complete combustion reactor (30).

16. Apparatus according to claim 15, comprising a second complete combustion reactor (40), and second connecting means connecting an exit opening of the first complete combustion reactor (30) with an inlet of the second complete combustion reactor (40).

17. Apparatus according to claim 15 or claim 16, wherein the first and/or second complete combustion reactor (30, 40) is positioned in a tank (11) containing fuel and/or waste.

18. Apparatus according to claim 17, wherein the tank (11) is provided with mixing and/or stirring means (12) for moving and/or mixing and/or stirring the fuel and/or waste in the tank (11).

**19.** Apparatus according to claim 17 or claim 18, wherein the tank (11) is provided with input and/or output means for periodically and/or continuously feeding fuel and/or waste into the tank (11) and for periodically and/or continuously removing solid and/or fluid remains from the tank (11).

**20.** Apparatus according to any one of the claims 17 to 19, wherein the tank (11) is cylindrical in horizontal cross-section, and the first complete combustion reactor (30) is placed vertically in the tank (11), a vertical central axis (39) of the first complete combustion reactor (30) being concentric or eccentric in relation to a vertical central axis of the tank (11).

**21.** Apparatus according to any one of the claims 15 to 20, comprising thermoelectric semiconductors (21) positioned on an outer periphery of the first and/or second complete combustion reactor (30, 40).

**22.** Apparatus according to any one of the claims 15 to 21, wherein the exhaust condenser (50) comprises two cones (58) with a common vertical central axis (A), with their tips (59) pointing towards each other, and a lime absorbing filter (54) placed under the cones (58) in the path of the solid and/or fuel condensate.

**23.** Apparatus according to any one of the claims 15 to 22, comprising a gas cleaning unit (60) after the output of the first and/or second complete combustion reactor (30, 40) or the exhaust condenser (50).

**24.** Apparatus according to claim 23, wherein the cleaning unit (60) comprises a third complete combustion reactor.

**Patentansprüche**

**1.** Verfahren zum Vorbeugen globaler Erwärmung durch Entfernung schädlicher Abgase aus Müllverbrennungsanlagen oder Brennstoffbrennern, das die folgende Schritte umfasst:

a) Einführen von Brennstoff und/oder brennbarem Müll in einen zylindrischen, dünnwandigen Vollverbrennungsreaktor (30) mit einer ersten Reaktorkammer (34) und einer zweiten Reaktorkammer (35), und Zünden des Brennstoffs oder des brennbaren Mülls,

b) Einführen von Brennstoff und/oder Müll in eine Verbrennungsvorrichtung (10),

c) Verdampfen/Vergasen zumindest eines Teils des Brennstoffs und/oder Mülls in der Verbrennungsvorrichtung (10),

d) Beschleunigen der Dämpfe und/oder Gase, die aus dem Brennstoff und/oder Müll in der Verbrennungsvorrichtung (10) erzeugt sind, und Einführen der Dämpfe und/oder Gase in die erste und/oder zweite Reaktorkammer (34, 35) des Vollverbrennungsreaktors (30),

e) Vernebeln der Dämpfe und/oder Gase in der ersten und/oder zweiten Reaktorkammer (34, 35) des Vollverbrennungsreaktors (30)

f) Leiten der aus dem Vollverbrennungsreaktor (30) austretenden Rauchgase in einen Rauchgaskondensator (50) und Kondensieren der festen und kondensierbaren Partikel aus dem Rauchgas, und schließlich

g) vollständiges Recyclen des gereinigten Abgases, insbesondere des $CO_2$ Gehalts des Abgases, bevorzugt als Düngemittel.

**2.** Verfahren nach Anspruch 1, worin ein Fließbett, ein Röster, eine Darre, ein Ofen, eine Müllveraschungs- oder Müllverbrennungs-Anlage (1) als Verbrennungsvorrichtung (10) verwendet wird.

**3.** Verfahren nach Anspruch 1 oder Anspruch 2, worin weniger als 12%, bevorzugt weniger als 10% Wasser zusätzlich in die erste und/oder zweite Reaktorkammer (34, 35) des Vollverbrennungsreaktors (30) eingeführt wird.

**4.** Verfahren nach einem der Ansprüche 1 oder 3, worin

a) die den Vollverbrennungsreaktor (30) verlassenden Rauchgase in einen zweiten Vollverbrennungsreaktor (40) eingeführt werden und

b) die aus dem ersten Vollverbrennungsreaktor (30) austretenden Rauchgase als Brennstoff in dem zweiten Vollverbrennungsreaktor (40) in einem Vollverbrennungsprozess verbrannt werden.

**5.** Verfahren nach Anspruch 4, worin der erste Vollverbrennungsreaktor (30) und/oder der zweite Vollverbrennungsrekaor (40) in einem Brennstoff und/oder Müll enthaltenden Tank angeordnet ist, und worin der Brennstoff und/oder Müll in dem Tank (11) durch die Wärme, die von dem ersten Vollverbrennungsreaktor (30) und/oder dem zweiten Vollverbrennungsreaktor (40) erzeugt wird, verdampft/vergast wird.

**6.** Verfahren nach Anspruch 4, worin der Brennstoff und/oder Müll kontinuierlich und/oder periodisch in den Tank gefördert wird.

**7.** Verfahren nach Anspruch 1 oder Anspruch 6, worin der Brennstoff und/oder insbesondere der Müll während der Verdampfung/Vergasung bewegt und/oder vermischt und/oder gerührt wird.

**8.** Verfahren nach einem der Ansprüche 5 bis 7, worin die festen Reststoffe des Brennstoffs und/oder Mülls kontinuierlich und/oder periodisch aus dem Tank (11) entfernt werden.

**9.** Verfahren nach einem der Ansprüche 1 bis 8, worin die Verdampfung/Vergasung des Mülls in niedrig oxydierenden oder unterstöchiometrischen Bedingungen durchgeführt wird.

**10.** Verfahren nach einem der Ansprüche 1 bis 9, worin thermoelektrische Halbleiter (21) an dem Aussenumfang des ersten und/oder zweiten Vollverbrennungsreaktors (30, 40) angeordnet sind und durch die thermoelektrischen Halbleiter (21) elektrische Energie erzeugt wird.

**11.** Verfahren nach einem der Ansprüche 1 bis 10, worin das Recyclen des gereinigten Abgases, bevorzugt $CO_2$, erfolgt, indem es in Wasser zur Algen-, Reis- oder Biomassen-Produktion hochsprudeln gelassen oder in Stahlflaschen komprimiert wird.

**12.** Verfahren nach einem der Ansprüche 1 bis 11, worin die Vollverbrennung in dem ersten und/oder zweiten Müllverbrennungsreaktor (30, 40) die folgenden Formeln benutzt:

$$O_2 + O_2 + O_2 \Leftrightarrow O_3 + O_3$$

$$C + O_3 \Leftrightarrow CO + CO_2$$

$$SO_2 + CO + H_2O \Leftrightarrow H_2S + CO_2 + O + O$$

$$SO_2 + H_2S \Leftrightarrow S + S + H_2O + O \Leftrightarrow S_2 + H_2O + O$$

**13.** Verfahren nach einem der Ansprüche 1 bis 12, worin die verbleibenden gasförmigen Komponenten des Rauchgases, nach der Verbrennung in dem erstem und/oder zweiten Vollverbrennungsreaktor (30, 40), durch eine Reinigungseinheit (60) geleitet werden.

**14.** Verfahren nach Anspruch 13, worin die Reinigungseinheit (60) ein dritter Vollverbrennungsreaktor ist und die verbleibenden gasförmigen Komponenten in dem dritten Vollverbrennungsreaktor vollständig verbrannt werden.

**15.** Vorrichtung zum Veraschen und/oder Verbrennen von Brennstoff und/oder Müll, insbesondere zur Durchführung des Verfahrens zum Vorbeugen globaler Erwärmung nach Anspruch 1, umfassend:

a) eine geschlossene Müll- und/oder Brennstoffverbrennungsvorrichtung ( 10) mit einem Gassammelbereich (17),

b) einen ersten Vollverbrennungsreaktor (30),

c) ein Gasbeschleunigungsmittel (20),

d) ein Rauchgaskondensatormittel (50), das mit einer Auslassöffnung des ersten Vollverbrennungsreaktors (30) verbunden ist,

e) ein Rauchgasreinigungsmittel (60), das mit einer Auslassöffnung des ersten Vollverbrennungsreaktors (30) verbunden ist, und

f) ein Rauchgasrecyclingmittel (70), das mit einem Ausgang des Rauchgasreinigungsmittels (60) verbunden ist,

**dadurch gekennzeichnet, dass** der erste Vollverbrennungsreaktor (30) eine erste Reaktorkammer (34) und eine zweite Reaktorkammer (35) aufweist und das Gasbeschleunigungsmittel (20) den Gassammelbereich (17) der Verbrennungsvorrichtung (10) mit der ersten und/oder zweiten Reaktorkammer (34, 35) des Vollverbrennungsreaktors (30) verbindet.

**16.** Vorrichtung nach Anspruch 15, die einen zweiten Vollverbrennungsreaktor (40) und ein zweites Verbindungsmittel aufweist, das eine Ausgangsöffnung des ersten Vollverbrennungsreaktors (30) mit einem Einlass des zweiten Vollverbrennungsreaktors (40) verbindet.

**17.** Vorrichtung nach Anspruch 15 oder Anspruch 16, worin der erste und/oder zweite Vollverbrennungsreaktor (30, 40) in einem Brennstoff und/oder Müll enthaltenden Tank (11) angeordnet ist.

**18.** Vorrichtung nach Anspruch 17, worin der Tank (11) mit einem Misch- und/oder Rührmittel (12) versehen ist, um den Brennstoff und/oder Müll in dem Tank (11) zu bewegen und/oder zu mischen und/oder zu rühren.

**19.** Vorrichtung nach Anspruch 17 oder Anspruch 18, worin der Tank (11) mit einem Eingangs- und/oder Ausgangsmittel versehen ist, um Brennstoff und/oder Müll periodisch und/oder kontinuierlich in den Tank (11) zu fördern, und um periodisch und/oder kontinuierlich Feststoff- und/oder Fluidreste aus dem Tank (11) zu entfernen.

**20.** Vorrichtung nach einem der Ansprüche 17 bis 19, worin der Tank (11) im horizontalen Querschnitt zylindrisch ist und der erste Vollverbrennungsreaktor (30) vertikal in dem Tank (11) angeordnet ist, wobei eine vertikale Mittelachse (39) des ersten Vollverbrennungsreaktors (30) relativ zur vertikalen Mittelachse des Tanks (11) konzentrisch oder exzentrisch ist.

21. Vorrichtung nach einem der Ansprüche 15 bis 20, die thermoelektrische Halbleiter (21) aufweist, die an einem Umfang des ersten und/oder zweiten Vollverbrennungsreaktors (30, 40) angeordnet sind.

22. Vorrichtung nach einem der Ansprüche 15 bis 21, worin der Abgaskondensator (50) zwei Kegel (58) mit einer gemeinsamen vertikalen Mittelachse (A) aufweist, wobei ihre Spitzen (59) aufeinander zuweisen, sowie einen Kalkabsorbtionsfilter (54), der in dem Weg des Fest- und/oder Brennstoffkondensats unter den Kegeln (58) angeordnet ist.

23. Vorrichtung nach einem der Ansprüche 15 bis 22, die eine Gasreinigungseinheit (60) nach dem Ausgang des ersten und/oder zweiten Vollverbrennungsreaktors (30, 40) oder dem Abgaskondensator (50) aufweist.

24. Vorrichtung nach Anspruch 23, worin die Reinigungseinheit (60) einen dritten Vollverbrennungsreaktor aufweist.

**Revendications**

1. Procédé destiné à la prévention du réchauffement de la planète par l'élimination des gaz d'échappement nocifs provenant des incinérateurs de déchets et/ou des brûleurs de carburant, comprenant les étapes suivantes :

    a) introduction de déchets combustibles et/ou de carburant dans un réacteur à combustion complète cylindrique à paroi fine (30) avec une première chambre de réaction (34) et une seconde chambre de réaction (35) et inflammation des déchets combustibles et/ou de carburant,
    b) introduction de déchets et/ou de carburant dans un appareil d'incinération (10),
    c) évaporation/gazéification d'au moins une partie des déchets et/ou de carburant dans l'appareil d'incinération (10),
    d) accélération des vapeurs et/ou des gaz générés par les déchets et/ou de carburant dans l'appareil d'incinération (10) et introduction des vapeurs et/ou des gaz dans la première et/ou la seconde chambre de réaction (34, 35) du réacteur à combustion complète (30),
    e) atomisation des vapeurs et/ou des gaz dans la première et/ou la seconde chambre de réaction (34, 35) du réacteur à combustion complète (30),
    f) guidage des gaz de combustion sortant du réacteur à combustion complète (30) dans un condensateur de gaz de combustion (50), et condensation des particules solides et condensables des gaz de combustion, et enfin
    g) recyclage complet des gaz de combustion nettoyés, en particulier du $CO_2$ contenu dans les gaz de combustion, de préférence sous forme de fertilisant.

2. Procédé selon la revendication 1, dans lequel un lit fluidisé, un four de grillage, un four, un fourneau, un incinérateur à déchets ou une installation d'incinération de déchets (1) est utilisé comme appareil d'incinération (10).

3. Procédé selon la revendication 1 ou la revendication 2, dans lequel moins de 12 %, et de préférence moins de 10 %, d'eau sont ajoutés dans la première et/ou la seconde chambre de réaction (34, 35) du réacteur à combustion complète (30).

4. Procédé selon l'une quelconque des revendications 1 à 3, dans lequel

    a) les gaz de combustion sortant du réacteur à combustion complète (30) sont introduits dans un second réacteur à combustion complète (40), et
    b) les gaz de combustion sortant du premier réacteur à combustion complète (30) sont brûlés comme carburant dans le second réacteur à combustion complète (40) au cours d'un processus de combustion complète.

5. Procédé selon la revendication 4, dans lequel le premier réacteur à combustion complète (30) et/ou le second réacteur à combustion complète (40) sont placés dans une cuve (11) contenant du carburant et/ou des déchets, et le carburant et/ou les déchets dans la cuve (11) sont évaporés/gazéifiés par la chaleur générée par le premier réacteur à combustion complète (30) et/ou le second réacteur à combustion complète (40).

6. Procédé selon la revendication 4, dans lequel le carburant et/ou les déchets sont chargés en continu et/ou périodiquement dans la cuve (11).

7. Procédé selon la revendication 1 ou la revendication 6, dans lequel le carburant et/ou plus particulièrement les déchets sont remués et/ou mélangés et/ou agités au cours de l'évaporation/la gazéification.

**8.** Procédé selon l'une quelconque des revendications 5 à 7, dans lequel les résidus solides du carburant et/ou des déchets sont éliminés en continu et/ou périodiquement de la cuve (11).

**9.** Procédé selon l'une quelconque des revendications 1 à 8, dans lequel l'évaporation/la gazéification des déchets est effectuée dans des conditions d'oxydation lente ou sub-stoechiométriques.

**10.** Procédé selon l'une quelconque des revendications 1 à 9, dans lequel des semi-conducteurs thermoélectriques (21) sont disposés sur la périphérie extérieure du premier et/ou du second réacteur à combustion complète (30, 40), et de l'énergie électrique est produite par les semi-conducteurs thermoélectriques (21).

**11.** Procédé selon l'une quelconque des revendications 1 à 10, dans lequel le recyclage des gaz de combustion nettoyés, de préférence du $CO_2$, se fait en les injectant dans de l'eau pour produire des algues, du riz ou de la biomasse, ou en les comprimant dans des bonbonnes en acier.

**12.** Procédé selon l'une quelconque des revendications 1 à 11, dans lequel la combustion complète dans le premier et/ou le second réacteur à combustion complète (30, 40) utilise les formules suivantes :

$$O_2 + O_2 + O_2 <=> O_3 + O_3$$

$$C + O_3 <=> CO + CO_2$$

$$SO_2 + CO + H_2O <=> H_2S + CO_2 + O + O$$

$$SO_2 + H_2S <=> S + S + H_2O + O <=> S_2 + H_2O + O$$

**13.** Procédé selon l'une quelconque des revendications 1 à 12, dans lequel les composants gazeux restants des gaz de combustion résultant de la combustion dans le premier et/ou le second réacteur à combustion complète (30, 40) sont passés à travers une unité de nettoyage (60).

**14.** Procédé selon la revendication 13, dans lequel l'unité de nettoyage (60) est un troisième réacteur à combustion complète, et les composants gazeux restants sont entièrement brûlés dans le troisième réacteur à combustion complète.

**15.** Appareil pour incinérer et/ou brûler du carburant et/ou des déchets, et particulièrement pour appliquer le procédé destiné à la prévention du réchauffement de la planète selon la revendication 1, comprenant

a) un appareil d'incinération de déchets et/ou de carburant fermé (10) avec une région de collecte des gaz (17),
b) un premier réacteur à combustion complète (30),
c) un moyen d'accélération des gaz (20),
d) un moyen de condensation des gaz de combustion (50) connecté à une ouverture de combustion du premier réacteur à combustion complète (30),
e) un moyen de nettoyage des gaz de combustion (60) connecté à l'ouverture de combustion du premier réacteur à combustion complète (30), et
f) un moyen de recyclage des gaz de combustion (70) connecté à une sortie du moyen de nettoyage des gaz de combustion (60),

     **caractérisé en ce que** le premier réacteur à combustion complète (30) a une première chambre de réaction (34) et une seconde chambre de réaction (35), et ledit moyen d'accélération des gaz (20) connecte la région de collecte des gaz (17) de l'appareil d'incinération (10) avec la première et/ou la seconde chambre de réaction (34, 35) du réacteur à combustion complète (30).

**16.** Appareil selon la revendication 15, comprenant un second réacteur à combustion complète (40) et un second moyen de connexion connectant une ouverture de sortie du première réacteur à combustion complète (30) avec une entrée du second réacteur à combustion complète (40).

**17.** Appareil selon la revendication 15 ou la revendication 16, dans lequel le premier et/ou le second réacteurs à combustion complète (30, 40) sont placés dans une cuve (11) contenant du carburant et/ou des déchets.

**18.** Appareil selon la revendication 17, dans lequel la cuve (11) est dotée d'un moyen de mélange et/ou d'agitation (12) pour remuer et/ou mélanger et/ou agiter le carburant et/ou les déchets dans la cuve (11).

**19.** Appareil selon la revendication 17 ou la revendication 18, dans lequel la cuve (11) est dotée d'un moyen d'entrée et/ou de sortie pour charger périodiquement et/ou en continu le carburant et/ou les déchets dans la cuve (11) et pour éliminer périodiquement et/ou en continu les résidus solides et/ou liquides de la cuve (11).

**20.** Appareil selon l'une quelconque des revendications 17 à 19, dans lequel la cuve (11) est cylindrique dans sa section horizontale, et le premier réacteur à combustion complète (30) est placé verticalement dans la cuve (11), un axe central vertical (39) du premier réacteur à combustion complète (30) étant concentrique ou excentrique par rapport à un axe central vertical de la cuve (11).

21. Appareil selon l'une quelconque des revendications 15 à 20, comprenant des semi-conducteurs thermoélectriques (21) disposés sur une périphérie extérieure du premier et/ou du second réacteur à combustion complète (30, 40).

22. Appareil selon l'une quelconque des revendications 15 à 21, dans lequel le moyen de condensation à l'échappement (50) comprend deux cônes (58) avec un axe central vertical commun (A), leurs pointes (59) étant orientées l'une vers l'autre, et un filtre absorbant à la chaux (54) placé sous les cônes (58) sur le chemin du condensat de matière solide et/ou de carburant.

23. Appareil selon une des revendications 15 à 22, comprenant une unité de nettoyage des gaz (60) après la sortie du premier et/ou du second réacteur à combustion complète (30, 40) ou le moyen de condensation à l'échappement (50).

24. Appareil selon la revendication 23, dans lequel l'unité de nettoyage (60) comprend un troisième réacteur à combustion complète.

Fig. 1.

Fig. 2.

Fig. 3.

Fig. 4.

# Fig. 5.

EP 1 071 912 B1